# EUROPÄISCHE PATENTSCHRIFT

(11) **EP 1 869 272 B1**
(45) Veröffentlichungstag und Bekanntmachung des Hinweises auf die Patenterteilung: **23.07.2008**
(21) Anmeldenummer: 06708791.6
(22) Anmeldetag: 16.03.2006
(51) Int. Cl.: E05B 65/20

(54) **BETÄTIGUNGSVORRICHTUNG**
ACTUATING DEVICE
DISPOSITIF D'ACTIONNEMENT

(30) Priorität: 05.04.2005 DE 102005015643
(43) Veröffentlichungstag der Anmeldung: 26.12.2007
(73) Patentinhaber: Huf Hülsbeck & Fürst GmbH & Co. KG, 42551 Velbert (DE)
(72) Erfinder: BUSCHMANN, Gerd, 42553 Velbert (DE)
(74) Vertreter: Vogel, Andreas
(86) Internationale Anmeldenummer: PCT/EP2006/060809
(87) Internationale Veröffentlichungsnummer: WO 2006/106033

(56) Entgegenhaltungen:
- EP-A- 0 579 867
- EP-A- 1 096 243
- EP-A- 1 284 335
- DE-A1- 3 311 992

## Beschreibung

Die Erfindung betrifft eine Betätigungsvorrichtung zum Schließen und/oder Öffnen eines beweglichen Teils eines Kraftfahrzeuges, insbesondere einer Tür, einer Heckklappe oder dergleichen, mit einem Gehäuse, einem drehbar gelagerten Tastelement, das bei Betätigung auf einen hinter dem Tastelement in einem abgeschirmten Innenraum angeordneten Schalter einwirkt. Bei der vorliegenden Erfindung ist der Schalter als Schaltelement oder als Aktivierungselement, insbesondere als Raster, Taster oder als Sensor oder dergleichen zu verstehen.

Derartige Betätigungsvorrichtungen sind aus dem Stand der Technik bekannt. Diese Betätigungsvorrichtungen werden insbesondere für den Fahrzeugbau benötigt, um Kraftfahrzeugtüren oder Heckklappen durch Betätigung einer Handhabe oder eines Griffs zu öffnen, wobei ein Türschloss elektromechanisch oder dergleichen geöffnet oder geschlossen wird.

Diese Betätigungsvorrichtungen befinden sich vorzugsweise geschützt in einer Griffmulde, wobei die Betätigungsvorrichtung mindestens ein einseitig drehbar gelagertes Tastelement aufweist, das bei Betätigung auf einen Schalter einwirkt, der hinter dem Tastelement in einem abgeschirmten (geschlossenen) Innenraum angeordnet ist. Um eine zufriedenstellende Funktionsweise der Betätigungsvorrichtung sicherzustellen, ist es für den Fachmann bekannt, an der Betätigungsvorrichtung Entlüftungsbohrungen vorzusehen. Während der Betätigung des Tastelementes wird dieses gleichzeitig um eine asymmetrisch angeordnete Schwenkachse geschwenkt, wobei die sich im Innenraum befindende Luft komprimiert wird und über vorhandene Entlüftungsbohrungen entweicht. Die Entlüftungsbohrungen sind in der Regel im Gehäuse angeordnet und verbinden den Fahrzeuginnenraum mit dem Innenraum der Betätigungsvorrichtung, um ein vom Tastelement verdrängtes Volumen entweichen zu lassen. Einer der wesentlichen Nachteile einer derartigen Betätigungsvorrichtung ist, dass über die Entlüftungsbohrungen Feuchtigkeit in den Innenraum der Betätigungsvorrichtung eindringen kann, wodurch die Funktionsweise der Betätigungsvorrichtung, insbesondere des Schalters, wesentlich beeinträchtigt werden kann. Aus diesem Grund muss der verwendete Schalter sowie seine elektrischen Kontaktstellen gegen äußere Witterungseinflüsse geschützt sein. Folglich sind weitere Fertigungsschritte notwendig, wodurch zusätzliche Kosten entstehen.

Ferner ist es bekannt, Filterelemente in den oben genannten Bohrungen anzuordnen, die verhindern, dass Feuchtigkeit in den Innenraum der Betätigungsvorrichtung eindringt. Die DE 692 22 934 T2 offenbart beispielsweise einen Filter aus PTFE (Polytetraflurethylen) in einem Druckschalter. Nachteiligerweise wird durch die Entlüftungsbohrungen sowie des Schutzfilters der Herstellungsaufwand der Betätigungsvorrichtung wesentlich erhöht.

Es ist Aufgabe der vorliegenden Erfindung, eine Betätigungsvorrichtung für ein Kraftfahrzeug zu schaffen, bei dem die genannten Nachteile vermieden werden, insbesondere eine Betätigungsvorrichtung bereitgestellt wird, die einfach gestaltet ist, ohne erheblichen Aufwand montiert werden kann und gute Funktionalitätseigenschaften aufweist.

Zur Lösung dieser Aufgabe wird eine Betätigungsvorrichtung mit den Merkmalen des Anspruches 1 vorgeschlagen. In den abhängigen Ansprüchen sind bevorzugte Weiterbildungen ausgeführt.

Dazu ist erfindungsgemäß vorgesehen, dass das Tastelement derart schwenkbar gelagert ist, dass das Volumen des Innenraumes in jeder Lage des Tastelementes im Wesentlichen gleich groß ist. Bei der Lagerung kann es sich beispielsweise um ein Dreh- oder Schwenklager handeln. Der besondere Vorteil dieser Erfindung ist, dass in keiner Lage des Tastelementes Luft aus dem Innenraum der Betätigungsvorrichtung verdrängt werden muss. Aus diesem Grund ist die Anordnung aufwendiger Entlüftungsbohrungen mit den im Stand der Technik genannten Nachteilen nicht notwendig. Vorteilhaft ist, dass der Innenraum der Betätigungsvorrichtung im Wesentlichen von der Umgebung sowie vom Fahrzeuginnenraum abgeschirmt ist, wodurch beispielsweise Schmutz oder Feuchtigkeit in den Innenraum nicht eindringen kann. Das bedeutet, dass die Luft im Innenraum eingeschlossen ist und nicht in die Umgebung oder in den Fahrzeuginnenraum entweichen kann. Somit ist der im Innenraum befestigte Schalter geschützt, wodurch die Lebensdauer der Betätigungsvorrichtung sowie ihre Funktionseigenschaften wesentlich erhöht werden. Das Volumen des Innenraumes wird hierbei im Wesentlichen durch die Wandung des Gehäuses und durch die Wandung des Tastelementes begrenzt.

In einer möglichen Ausführungsform der Erfindung kann das Tastelement im Wesentlichen symmetrisch gelagert sein. Das Tastelement kann beispielsweise als zweiarmiges Hebelelement ausgeführt sein, wobei die Schwenkachse mittig am Tastelement angeordnet ist. Wird das Tastelement betätigt, bewegt sich ein Arm des Hebelelementes in den Innenraum, während gleichzeitig der zweite Arm des Hebelelementes aus dem Innenraum sich verschwenkt. In dieser Ausführungsform stellt das Tastelement eine Art Klappe dar, die um die mittig angeordnete Schwenkachse verschwenkbar ist. Ein weiterer Vorteil dieser Betätigungsvorrichtung ist, dass durch sich ändernde Luftdruckeinflüsse in der Umgebung - beispielsweise hervorgerufen durch Talfahrten in einem bestimmten Höhenbereich - die Betätigungsvorrichtung nicht selbstständig oder unabsichtlich auslösen kann. Für die erfindungsgemäße Betätigungsvorrichtung ist es unerheblich, welcher Außendruck auf das Tastelement einwirkt. Die ausgehend vom Innenraum sowie aus der Umgebung auf das Tastelement einwirkenden Kräfte beziehungsweise Drehmomente heben sich durch die symmetrische Lagerung stets auf. Bei der symmetrischen Lagerung kann das Tastelement beispielsweise achssymmetrisch an der Schwenkachse angeordnet sein. Hierbei kann die Schwenkachse in einer möglichen Ausgestaltung der Erfindung horizontal, vertikal oder auch diagonal verlaufen. Durch die achssymmetrische Lagerung wird erfindungsgemäß erreicht, dass kein Verdrängungsvolumen entsteht, welches aus dem Innenraum für eine zuverlässige Funktionsweise der Betätigungsvorrichtung abzuführen ist. Fehlauslösungen durch Temperaturschwankungen können ebenfalls durch die vorliegende Erfindung vermieden werden. Bei tiefen Temperaturen wird nicht mehr - wie bei den im Stand der Technik bekannten Vorrichtungen - eine Verringerung des Innenvolumens hervorgerufen, wodurch eine Bewegung des Tastelementes in Richtung des Schalters sowie eine etwaige ungewollte Auslösung der Betätigungsvorrichtung wirksam verhindert wird.

In einer weiteren Alternative der Erfindung ist das Tastelement über ein Dichtmittel mit dem Gehäuse der Betätigungsvorrichtung kraftschlüssig und/oder formschlüssig und/oder stoffschlüssig verbunden. In einer besonders bevorzugten Ausführungsform ist das Dichtmittel mit einer umlaufenden Laserverschweißung mit dem Gehäuse verbunden. Selbstverständlich kann das Dichtmittel alternativ beispielsweise durch eine Reibverschweißung, eine Ultraschallverschweißung oder durch eine Klebverbindung am Gehäuse befestigt sein.

Zweckmäßigerweise ist das Dichtmittel eine elastische Membran aus einem Kunststoff, wobei in Ruhestellung das schwenkbare Tastelement durch die Membran in einem geringen Abstand zu dem Schalter gehalten wird, wodurch eine äußerst flache Bauweise der Betätigungsvorrichtung ermöglicht wird. In einer weiteren Ausgestaltungsmöglichkeit der Betätigungsvorrichtung können das Tastelement und die elastische Membran als einstückiges Kunststoffteil gestaltet sein. Das Tastelement kann aus einem Kunststoffmaterial bestehen, wobei es als Leichtbauteil mit Verstärkungsstegen ausgebildet sein kann.

Vorzugsweise hat in einer ersten Stellung das Tastelement einen Abstand zum Schalter und kontaktiert diesen in einer zweiten Stellung. Vorzugsweise beträgt der Abstand des Tastelementes zum Schalter in einer ersten Stellung (Ruhestellung) zwischen 0,5 mm und 5 mm, vorzugsweise zwischen 0,7 mm und 3 mm und besonders bevorzugt zwischen 1 mm und 2 mm. Bei Betätigung des Tastelementes übt dieses einen geringen Hub aus, wobei es in der zweiten Stellung den Schalter kontaktiert, der in einer möglichen Ausführungsform über eine elektronische Steuervorrichtung einen Elektromotor eines elektrischen Tür-/Heckklappenschlosses aktiviert und somit eine Offenstellung der Betätigungsvorrichtung hervorruft. Der Schalter kann beispielsweise von der Wandung des Gehäuses in den Innenraum ragen. Ebenfalls ist es denkbar, wenn der Schalter in einer Einbuchtung des Gehäuses eingesetzt ist.

Eine weitere vorteilhafte Ausgestaltung der Erfindung sieht vor, dass das Tastelement einen in den Innenraum sich erstreckenden Vorsprung aufweist, der in der zweiten Stellung den Schalter kontaktiert. In der Ruhestellung weist der Vorsprung den oben genannten Abstand zum Schalter auf.

Vorzugsweise ist die Betätigungsvorrichtung derart ausgebildet, dass bei Betätigung an unterschiedlichen Stellen des Tastelementes eine funktionsgerechte Verschwenkung von der ersten in die zweite Stellung und umgekehrt erzielt werden kann. Die Betätigungsvorrichtung findet sich in einer bevorzugten Ausführungsform geschützt in einer Griffmulde, wobei der Benutzer zur Betätigung des Tastelementes seine Hand in die Griffmulde führen muss, um anschließend eine bestimmte Kraft auf das Tastelement mit seinen Fingern auszuüben. Das erfindungsgemäße Tastelement ist zweckmäßigerweise ergonomisch ausgeführt, wobei das Tastelement eine dem Innenraum abgewandte Tastfläche aufweist. Hierdurch wird eine sichere Betätigung des Tastelementes unabhängig von der Stelle der Druckbeaufschlagung auf die Tastfläche des Tastelementes gewährleistet.

Bei einer bevorzugten Ausführungsform weist die Betätigungsvorrichtung ein Rückstellmechanismus auf, welcher das verschwenkbare Tastelement von der zweiten in die erste Stellung bringt. Bei Betätigung des Tastelementes übt der Rückstellmechanismus ein entsprechendes Rückstellmoment aus. In einer möglichen Ausführungsform kann der Rückstellmechanismus ein in Wirkverbindung mit dem Tastelement stehendes Federelement aufweisen.

Selbstverständlich ist es in einer weiteren Ausgestaltungsform der Erfindung möglich, den Rückstellmechanismus im Schalter zu integrieren. Bei dieser Ausführungsform erzeugt der Schalter selbst ein entsprechendes Rückstellmoment, wodurch das Tastelement von der zweiten Stellung in die Ruhestellung verschwenkt wird. Hierbei kann der Schalter beispielsweise als Schnappschalter ausgeführt sein. In einer weiteren möglichen Alternative kann der Schalter, der bezüglich der vorliegenden Erfindung als allgemeines Aktivierungselement zum Öffnen eines beweglichen Teil (Tür, Hecklappe oder dergleichen) zu verstehen ist, als Magnetschalter oder als Sensor, insbesondere als kapazitiver Sensor oder als Hall-Sensor, oder als Piezoelement ausgeführt sein.

Ferner ist es ebenfalls denkbar, dass durch das Dichtmittel, welches das Tastelement mit dem Gehäuse verbindet, eine entsprechende Rückstellkraft beziehungsweise ein Rückstellmoment alternativ oder zusätzlich zu den oben genannten Mitteln ausgeübt wird.

In einer weiteren Ausgestaltungsmöglichkeit der Betätigungsvorrichtung weist das Tastelement von der ersten Stellung in die zweite Stellung einen Drehwinkel auf, der zwischen 2° und 10°, vorzugsweise zwischen 3° und 8°, und in einer besonders bevorzugten Ausführungsform zwischen 4° und 6° liegt. Hierdurch wird eine kompakte, flache Betätigungsvorrichtung geschaffen, die eine geringe Bauhöhe benötigt. Zweckmäßigerweise ist für die Verstellung des Tastelementes von der ersten Stellung in die zweite Stellung eine Kraft notwendig, die zwischen 5 N und 30 N, vorzugsweise zwischen 7 N und 20 N und besonders bevorzugt zwischen 10 N und 15 N liegt. Das Rückstellmoment des Rückstellmechanismus ist der für die Verstellung notwendigen Kraft dementsprechend anzupassen.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine Schnittdarstellung der Betätigungsvorrichtung in Ruhestellung,
- Figur 2: die Betätigungsvorrichtung gemäß Figur 1, wobei der Schalter kontaktiert ist,
- Figur 3: eine alternative Ausführungsform der Betätigungsvorrichtung und
- Figur 4: eine mögliche Ausgestaltungsform des Dichtelementes der Betätigungsvorrichtung.

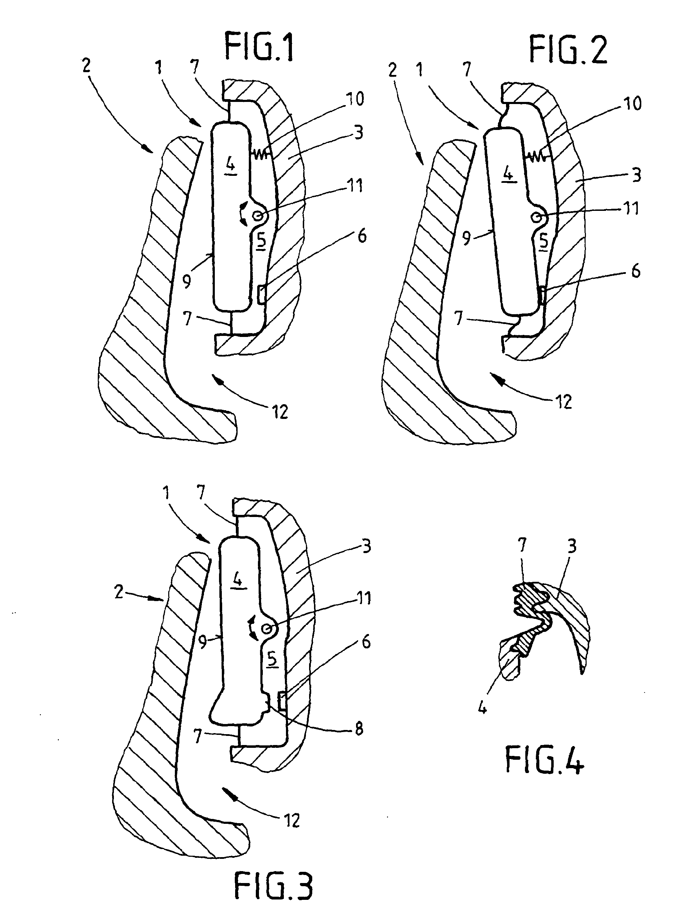

Figur 1 zeigt eine Betätigungsvorrichtung 1 zur elektromechanischen Betätigung einer Heckklappe 2 eines Kraftfahrzeuges. Wie Figur 1 verdeutlicht, ist die Betätigungsvorrichtung 1 in einer Griffmulde 12 geschützt angeordnet. Die Betätigungsvorrichtung 1 umfasst ein Tastelement 4, das drehbar gelagert an einem Gehäuse 3 an der Heckklappe 2 angeordnet ist. Hinter dem Tastelement 4 befindet sich ein abgeschirmter Innenraum 5, in dem ein Schalter 6 sich befindet. Der Schalter 6 kann zum Beispiel als Mikroschalter ausgeführt sein. Der Innenraum 5 ist vom Außenbereich des Kraftfahrzeuges durch ein Dichtmittel 7 vollständig getrennt. Ausgehend vom Fahrzeuginnenraum besteht ebenfalls keine Verbindung zum Innenraum 5. Das Dichtmittel 7 ist im dargestellten Ausführungsbeispiel eine elastische Membran 7, die das Tastelement 4 mit dem Gehäuse 3 der Betätigungsvorrichtung 1 verbindet. Die Membran 7 ist hierbei rein schematisch dargestellt. Im vorliegenden Ausführungsbeispiel ist die elastische Membran 7 mit dem Gehäuse 3 laserverschweißt. Eine mögliche Anordnung der Membran 7 am Gehäuse 3 und am Tastelement 4 ist in Figur 4 verdeutlicht.

Das Tastelement 4 weist eine horizontal verlaufende Schwenkachse 11 auf, wobei das Tastelement 4 achssymmetrisch zur Schwenkachse 11 positioniert ist. Das Tastelement 4, das im Ausführungsbeispiel ein Spritzgussteil aus Kunststoff ist, befindet sich in einer ersten Stellung (Ruhestellung), bei der es einen Abstand zum Schalter 6 hat. Der Abstand beträgt hierbei ca. 1,5 mm.

Damit der Schalter 6 betätigt wird, ist eine auf das Tastelement 4 wirkende Schalterbetätigungskraft notwendig, die das Tastelement 4 um einen bestimmten Winkel verschwenkt. Die Kontaktierung des Schalters 6 ist in Figur 2 verdeutlicht. Die auf die Tastfläche 9 des Tastelementes 4 notwendige Kraft beträgt 15 N, wodurch das Tastelement 4, das in Figur 1 und Figur 2 als eine Art zweiarmiges Hebelement ausgeführt ist, mit der dem Innenraum 5 zugewandten Seite den Schalter 6 kontaktiert. Die Kontaktierung des Schalters 6 bewirkt einen Öffnungsvorgang der Heckklappe 2, der im Einzelnen nicht beschrieben ist. Das Tastelement 4 wird von der ersten Stellung in die zweite Stellung um einen Drehwinkel von ca. 5° um die Schwenkachse 11 verschwenkt.

Damit das Tastelement 4 von der zweiten Stellung in die erste Stellung zurück verschwenkt werden kann, weist die Betätigungsvorrichtung 1 einen Rückstellmechanismus 10 auf, der ein entsprechend hohes Rückstelldrehmoment auf das Tastelement 4 ausübt. Der Rückstellmechanismus 10 kann beispielsweise ein Federelement 10 umfassen, welches in Figur 1 und Figur 2 dargestellt ist. Das Federelement 10 ist an einer ersten Seite am Gehäuse 3 und an einer der ersten Seite gegenüberliegenden Seite am Tastelement 4 befestigt. Wird das Tastelement 4 durch die Schalterbetätigungskraft gegen den Uhrzeigersinn an der Schwenkachse 11 von der ersten Stellung in die zweite Stellung bewegt, übt das Federelement 10, das in einem Abstand zur Schwenkachse 11 angeordnet ist, ein entsprechendes Rückstelldrehmoment auf das Tastelement 4 aus.

Gemäß Figur 3 ist der Rückstellmechanismus 10 im Schalter 6 integriert. Kontaktiert das Tastelement 4 den Schalter 6, übt dieser auf die den Innenraum 5 zugewandte Fläche des Tastelementes 4 eine entsprechende Rückstellkraft aus. Zusätzlich oder alternativ kann von der elastischen Membran 7 ein Rückstelldrehmoment auf das Tastelement 4 ausgeübt werden. Das Tastelement 4 ist in Figur 3 zusätzlich mit einem Vorsprung 8 ausgebildet, der sich in den Innenraum 5 der Betätigungsvorrichtung 1 erstreckt. In Ruhestellung des Tastelementes 4 weist der Vorsprung 8 einen entsprechenden Abstand zum Schalter 6 auf, wobei in der zweiten Stellung des Tastelementes 4 der Vorsprung 8 den Schalter 6 kontaktiert. In der dargestellten Ausführungsform ist der Vorsprung 8 einstückig mit dem Tastelement 4 verbunden. Selbstverständlich ist es möglich, den Vorsprung 8 als selbständiges Bauteil an der auf den Innenraum 5 zugewandten Seite des Tastelementes 4 zu befestigen, welches explizit nicht dargestellt ist. Das Tastelement 4 ist zusätzlich an der dem Innenraum 5 abgewandten Seite im Bereich der Griffmulde 12 ergonomisch ausgeführt, wodurch die eine Betätigung des Tastelementes 4 durch den Benutzer erleichtert werden kann.

In Figur 1 und Figur 2 wird rein schematisch verdeutlicht, dass das Volumen des Innenraums 5 in jeder Lage des Tastelementes 4 im Wesentlichen gleich groß ist, wodurch die Funktionalität der Betätigungsvorrichtung 1 verbessert wird. Das Volumen des Innenraumes 5 wird in den Ausführungsbeispielen durch die Wandung des Gehäuses 3, durch die Wandung des Tastelementes 4 sowie durch das Dichtmittel 7 begrenzt, das das Tastelement 4 an seinem Randbereich mit dem Gehäuse 3 abdichtend verbindet. In einer alternativen Ausführungsform kann der Schalter 6 auch als Sensor arbeiten, mit dem ein Schließen und Öffnen der Heckklappe bzw. ein Entriegeln und Verriegeln des Schlosses der Heckklappe 2 bewirkt werden kann. Der Sensor kann beispielsweise ein kapazitiver Sensor oder ein Hall-Sensor sein. In einer weiteren möglichen Alternative kann der genannte Schalter 6 auch als Magnetschalter oder als Piezoelement ausgeführt sein.

Das dargestellte Tastelement 4 aus den Figuren 1 bis 3 ist derart in der Griffmulde 12 positioniert, dass der Benutzer den unteren Hebelarm des Tastelementes 4, der dem Schalter 6 zugewandt ist, betätigen kann. Somit wird eine sichere Betätigung des Tastelementes 4 unabhängig von der Stelle der Druckbeaufschlagung auf die Tastfläche 9 gewährleistet, die zum Beispiel auf ihrer Oberfläche profiliert sein kann.

Die Anordnung der Membran 7 in den Figuren 1 bis 3 ist rein schematisch angedeutet. Eine mögliche Verbindung des Tastelementes 4 mit dem Gehäuse 3 über die Membran 7 ist in Figur 4 beispielhaft angedeutet. Das Tastelement 4 kann mit der Membran 7 zum Beispiel verschweißt oder verklebt sein. Die Membran 7 kann ebenfalls in einer nicht dargestellten Alternative der Erfindung einstückig mit dem verschwenkbaren Tastelement 4 verbunden sein.

### Bezugszeichenliste

- **1**: Betätigungsvorrichtung
- **2**: Heckklappe
- **3**: Gehäuse
- **4**: Tastelement
- **5**: Innenraum
- **6**: Schalter, Mikroschalter
- **7**: Dichtmittel, Membran
- **8**: Vorsprung
- **9**: Tastfläche
- **10**: Rückstellmechanismus, Feder
- **11**: Schwenkachse
- **12**: Griffmulde

## Patentansprüche

1. Betätigungsvorrichtung (1) zum Schließen und/oder Öffnen eines beweglichen Teils (2) eines Kraftfahrzeuges, insbesondere einer Tür, einer Hecklappe oder dergleichen, mit einem Gehäuse (3), einem drehbar gelagerten Tastelement (4), das bei Betätigung auf einen hinter dem Tastelement (4) in einem abgeschirmten Innenraum (5) angeordneten Schalter (6) einwirkt,
**dadurch gekennzeichnet,**
**dass** das Tastelement (4) derart schwenkbar gelagert ist, dass das Volumen des Innenraumes (5) in jeder Lage des Tastelementes (4) im wesentlichen gleich groß ist.

2. Betätigungsvorrichtung (1) nach Anspruch 1,
**dadurch gekennzeichnet,**
**dass** das Tastelement (4) symmetrisch gelagert ist.

3. Betätigungsvorrichtung (1) nach Anspruch 1 oder 2,
**dadurch gekennzeichnet,**
**dass** das Tastelement (4) über Dichtmittel (7) mit dem Gehäuse (3) kraftschlüssig und/oder formschlüssig und/oder stoffschlüssig verbunden ist.

4. Betätigungsvorrichtung (1) nach einem der vorhergehenden Ansprüche,
**dadurch gekennzeichnet,**
**dass** das Dichtmittel (7) eine elastische Membran ist.

5. Betätigungsvorrichtung (1) nach einem der vorhergehenden Ansprüche,
**dadurch gekennzeichnet,**
**dass** in einer ersten Stellung das Tastelement (4) einen Abstand zum Schalter (6) aufweist und in einer zweiten Stellung das Tastelement (4) den Schalter (6) kontaktiert.

6. Betätigungsvorrichtung (1) nach Anspruch 5,
**dadurch gekennzeichnet,**
**dass** der Abstand zwischen 0,5 mm und 5 mm, vorzugsweise der Abstand zwischen 0,7 mm und 3 mm und besonders bevorzugt der Abstand zwischen 1 mm und 2 mm beträgt.

7. Betätigungsvorrichtung (1) nach einem der vorhergehenden Ansprüche,
**dadurch gekennzeichnet,**
**dass** das Tastelement (4) einen in den Innenraum (5) sich erstreckenden Vorsprung (8) aufweist, der in der zweiten Stellung den Schalter (6) kontaktiert.

8. Betätigungsvorrichtung (1) nach einem der vorhergehenden Ansprüche,
**dadurch gekennzeichnet,**
**dass** das Tastelement (4) ergonomisch ausgeführt ist.

9. Betätigungsvorrichtung (1) nach einem der vorhergehenden Ansprüche,
**dadurch gekennzeichnet,**
**dass** das Tastelement (4) eine dem Innenraum (5) abgewandte Tastfläche (9) aufweist.

10. Betätigungsvorrichtung (1) nach einem der vorhergehenden Ansprüche,
**dadurch gekennzeichnet,**
**dass** ein Rückstellmechanismus (10) das Tastelement (4) von der zweiten in die erste Stellung bringt.

11. Betätigungsvorrichtung (1) nach einem der vorhergehenden Ansprüche,
**dadurch gekennzeichnet,**
**dass** der Rückstellmechanismus (10) ein in Wirkverbindung mit dem Tastelement (4) stehendes Federelement aufweist.

12. Betätigungsvorrichtung (1) nach Anspruch 10 oder 11,
**dadurch gekennzeichnet,**
**dass** der Rückstellmechanismus (10) im Schalter (6) integriert ist.

13. Betätigungsvorrichtung (1) nach einem der vorhergehenden Ansprüche,
**dadurch gekennzeichnet,**
**dass** das Tastelement (4) von der ersten Stellung in die zweite Stellung einen Drehwinkel aufweist, der zwischen 2° und 10°, vorzugsweise zwischen 3° und 8° und besonders bevorzugt zwischen 4° und 6° liegt.

14. Betätigungsvorrichtung (1) nach einem der vorhergehenden Ansprüche,
**dadurch gekennzeichnet,**
**dass** für die Verstellung des Tastelementes (4) von der ersten Stellung in die zweite Stellung eine Kraft notwendig ist, die zwischen 5 N und 30 N, vorzugsweise zwischen 7 N und 20 N und besonders bevorzugt zwischen 10 N und 15 N liegt.

15. Betätigungsvorrichtung (1) nach einem der vorhergehenden Ansprüche,
**dadurch gekennzeichnet,**
**dass** das Tastelement (4) als zweiarmiges Hebelelement ausgeführt ist, wobei die Schwenkachse (11) mittig am Tastelement (4) angeordnet ist.

16. Kraftfahrzeug mit einer Betätigungsvorrichtung (1) nach einem der vorhergehenden Ansprüche.

## Claims

1. An actuating device (1) for closing and/or opening a moving part (2) of a motor vehicle, in particular a door, a tailgate or the like, with a casing (3), a rotatably mounted pushbutton element (4) which, when actuated, acts on a switch (6) arranged behind the pushbutton element (4) in a shielded interior space (5), **characterized in that** the pushbutton element (4) can swivel in such a way that the volume of the interior space (5) remains essentially the same in any position of the pushbutton element (4).

2. The actuating device (1) according to claim 1,
**characterized in that** the pushbutton element (4) is symmetrically mounted.

3. The actuating device (1) according to claim 1 or 2, **characterized in that** the pushbutton element (4) is non-positively and/or positively and/or materially bonded with the casing (3) by means of a sealant (7).

4. The actuating device (1) according to one of the preceding claims, **characterized in that** the sealant (7) is an elastic membrane.

5. The actuating device (1) according to one of the preceding claims, **characterized in that** the pushbutton element (4) is spaced apart from the switch (6) in a first position, and that the pushbutton element (4) contacts the switch (6) in a second position.

6. The actuating device (1) according to claim 5,
**characterized in that** the distance between the switch (6) and the pushbutton element (4) measures between 0.5 mm and 5 mm, preferably between 0.7 mm and 3 mm, and especially preferred between 1 mm and 2 mm.

7. The actuating device (1) according to one of the preceding claims, **characterized in that** the pushbutton element (4) exhibits a projection (8) that extends into the interior space (5) and contacts the switch (6) in the second position.

8. The actuating device (1) according to one of the preceding claims, **characterized in that** the pushbutton element (4) has an ergonomic design.

9. The actuating device (1) according to one of the preceding claims, **characterized in that** the pushbutton element (4) exhibits a keytop touch area (9) facing away from the interior space (5).

10. The actuating device (1) according to one of the preceding claims, **characterized in that** a resetting mechanism (10) moves the pushbutton element (4) from the second into the first position.

11. The actuating device (1) according to one of the preceding claims, **characterized in that** the resetting mechanism (10) exhibits a spring element that interacts with the pushbutton element (4).

12. The actuating device (1) according claim 10 or 11, **characterized in that** the resetting mechanism (10) is integrated into the switch (6).

13. The actuating device (1) according to one of the preceding claims, **characterized in that** the pushbutton element (4) exhibits an angle of rotation from the first position to the second position lying between 2° and 10°, preferably between 3° and 8°, and especially preferred between 4° and 6°.

14. The actuating device (1) according to one of the preceding claims, **characterized in that** a force measuring between 5 N and 30 N, preferably between 7 N and 20 N, and especially preferred between 10 N and 15 N is necessary to move the pushbutton element (4) from the first position into the second position.

15. The actuating device (1) according to one of the preceding claims, **characterized in that** the pushbutton element (4) is designed as a two-armed lever element, wherein the swiveling axis (11) is centrally situated on the pushbutton element (4).

16. A motor vehicle with an actuating device (1) according to one of the preceding claims.

## Revendications

1. Dispositif d'actionnement (1) pour la fermeture et/ou l'ouverture d'une partie mobile (2) d'un véhicule automobile, en particulier d'une porte, d'un hayon ou d'un élément similaire, muni d'un carter (3) et d'une touche (4) qui est montée à rotation et qui, lors d'un actionnement, agit sur un interrupteur (6) logé dans un compartiment intérieur isolé (5), derrière ladite touche (4),
**caractérisé par le fait**
**que** la touche (4) est montée avec faculté de pivotement telle que le volume du compartiment intérieur (5) soit sensiblement identique dans toute position de ladite touche (4).

2. Dispositif d'actionnement (1) selon la revendication 1,
**caractérisé par le fait**
**que** la touche (4) est montée symétriquement.

3. Dispositif d'actionnement (1) selon la revendication 1 ou 2,
**caractérisé par le fait**
**que** la touche (4) est reliée au carter (3) mécaniquement et/ou par conformation et/ou matériellement, par l'intermédiaire de moyens d'étanchement (7).

4. Dispositif d'actionnement (1) selon l'une des revendications précédentes,
**caractérisé par le fait**
**que** le moyen d'étanchement (7) est une membrane élastique.

5. Dispositif d'actionnement (1) selon l'une des revendications précédentes,
**caractérisé par le fait**
**que** la touche (4) se trouve à distance de l'interrupteur (6) dans une première position, et ladite touche (4) est en contact avec ledit interrupteur (6) dans une seconde position.

6. Dispositif d'actionnement (1) selon la revendication 5,
**caractérisé par le fait**
**que** la distance est comprise entre 0,5 mm et 5 mm, ladite distance étant de préférence comprise entre 0,7 mm et 3 mm, ladite distance étant notamment comprise, de préférence, entre 1 mm et 2 mm.

7. Dispositif d'actionnement (1) selon l'une des revendications précédentes,
**caractérisé par le fait**
**que** la touche (4) présente une saillie (8) qui pénètre dans le compartiment intérieur (5), et est en contact avec l'interrupteur (6) dans la seconde position.

8. Dispositif d'actionnement (1) selon l'une des revendications précédentes,
**caractérisé par le fait**
**que** la touche (4) est de réalisation ergonomique.

9. Dispositif d'actionnement (1) selon l'une des revendications précédentes,
**caractérisé par le fait**
**que** la touche (4) présente une surface de contact (9) tournée à l'opposé du compartiment intérieur (5).

10. Dispositif d'actionnement (1) selon l'une des revendications précédentes,
**caractérisé par le fait**
**qu'**un mécanisme de rappel (10) amène la touche (4) de la seconde à la première position.

11. Dispositif d'actionnement (1) selon l'une des revendications précédentes,
**caractérisé par le fait**
**que** le mécanisme de rappel (10) comporte un élément élastique en liaison opérante avec la touche (4).

12. Dispositif d'actionnement (1) selon la revendication 10 ou 11,
**caractérisé par le fait**
**que** le mécanisme de rappel (10) est intégré dans l'interrupteur (6).

13. Dispositif d'actionnement (1) selon l'une des revendications précédentes,
**caractérisé par le fait**
**que** la touche (4) présente, de la première position à la seconde position, un angle de rotation compris entre 2° et 10°, de préférence entre 3° et 8° et notamment, de préférence, entre 4° et 6°.

14. Dispositif d'actionnement (1) selon l'une des revendications précédentes,
**caractérisé par le fait**
**que** le déplacement de la touche (4), de la première position à la seconde position, réclame une force comprise entre 5 N et 30 N, de préférence entre 7 N et 20 N et notamment, de préférence, entre 10 N et 15 N.

15. Dispositif d'actionnement (1) selon l'une des revendications précédentes,
**caractérisé par le fait**
**que** la touche (4) est réalisée sous la forme d'un élément à deux bras de levier, l'axe de pivotement (11) occupant une position centrale sur ladite touche (4).

16. Véhicule automobile équipé d'un dispositif d'actionnement (1) selon l'une des revendications précédentes.
